# EUROPÄISCHE PATENTSCHRIFT

(11) **EP 2 622 826 B1**
(45) Veröffentlichungstag und Bekanntmachung des Hinweises auf die Patenterteilung: **22.08.2018**
(21) Anmeldenummer: 11761568.2
(22) Anmeldetag: 21.09.2011
(51) Int. Cl.: H04L 29/12, H04L 12/403, H04L 12/40

(54) **VERFAHREN ZUR AUTOMATISCHEN ADRESSVERGABE AN GLEICHARTIGE BUSTEILNEHMER**
METHOD FOR AUTOMATICALLY ASSIGNING ADDRESSES TO IDENTICAL BUS USERS
PROCÉDÉ D'ATTRIBUTION AUTOMATIQUE D'ADRESSE À DES ABONNÉS DE BUS DE MÊME TYPE

(30) Priorität: 30.09.2010 DE 102010041810
(43) Veröffentlichungstag der Anmeldung: 07.08.2013
(73) Patentinhaber: Robert Bosch GmbH, 70442 Stuttgart (DE)
(72) Erfinder: SCHLOTTMANN, Eckart, 71563 Affalterbach (DE); ASTOR, Christian, 70499 Stuttgart (DE); SUPRIJADI, Eko-Bono, 71638 Ludwigsburg (DE); SCHMIDT, Ralph, 74321 Bietigheim-Bissingen (DE)
(86) Internationale Anmeldenummer: PCT/EP2011/066444
(87) Internationale Veröffentlichungsnummer: WO 2012/041753

(56) Entgegenhaltungen:
- EP-A2- 0 893 767
- WO-A1-2005/051723
- DE-A1-102007 028 387
- US-A1- 2007 088 885

## Beschreibung

### Stand der Technik

Die Erfindung betrifft ein Verfahren zur automatischen Vergabe von Adressen an mindestens zwei gleichartige Teilnehmer eines Kommunikations-Bussystems durch ein koordinierendes Master-Steuergerät.

Moderne Fahrzeuge sind gekennzeichnet durch eine zunehmend stark vernetzte Architektur von Steuergeräten, die durch ein geeignetes Bussystem miteinander verbunden sind und unter Nutzung von hierzu zur Verfügung stehenden Protokollen Daten untereinander austauschen können.

Ein aus dem Stand der Technik bekanntes Bussystem ist der CAN Bus, der durch die Normen ISO 11898 beschrieben wird. Ein charakterisierendes Merkmal dieses Bussystems ist es, dass der Zugriff auf den Bus für den einzelnen Busteilnehmer im Rahmen der Arbitrierung abhängig von seiner Adresse gewährt wird oder nicht. Busteilnehmer mit niedrigen Adressen gewinnen im Falle eines gleichzeitigen Versuches gegenüber Busteilnehmern mit höheren Adressen und können ihren Datenrahmen auf dem Bus übertragen, während der Busteilnehmer mit der höheren Adresse einen erneuten Übertragungsversuch starten muss.

Übertragungsverfahren für Bussysteme wie dieses machen es erforderlich, bei der Konfiguration einer Buskommunikation für ein Fahrzeug die Auswahl der Adressen für jedes einzelne Steuergerät sorgfältig zu treffen. Denn abhängig von dieser Auswahl ist die Latenzzeit, die ein Busteilnehmer abhängig von der Busauslastung benötigen kann, um seine Daten auf den Bus zu übertragen, höher oder niedriger, mit entsprechenden möglichen Auswirkungen auf das Fahrzeugverhalten.

Es kommt vor, dass mehrere Busteilnehmer übereinstimmende Aufgaben haben. Beispielsweise können mehrere Sensoren, etwa zur Messung von Temperaturen oder Spannungen oder Drehzahlen an verschiedenen Punkten im Fahrzeug, gleichartig aufgebaut sein und ihre gemessenen Daten können eine ähnliche Priorität für das Fahrzeugverhalten besitzen.

Kommunikationsprotokolle wie das Protokoll des CAN Busses schreiben es jedoch regelmäßig vor, dass diese übereinstimmenden Busteilnehmer unterschiedliche Adressen haben, um an der Kommunikation über den Bus teilnehmen zu dürfen. Dies kann zu einem erhöhten Aufwand beim Zulieferer für die Bereitstellung der unterschiedlich programmierten Sensoren mit entsprechend unterschiedlicher Teilenummer etc., oder auch beim Fahrzeughersteller für die Programmierung der Sensoren am Bandende und / oder die zugehörige Logistik führen.

Es wäre demgegenüber vorteilhaft, wenn die Vergabe von geeigneten Adressen an gleichartige Busteilnehmer eines Netzwerkes automatisiert vonstatten gehen könnte und beispielsweise bis auf die Seriennummer identische Sensoren mit einheitlichen Teilenummern eingesetzt werden könnten.

Das Gebrauchsmuster DE 299 07 265 U1 beschreibt ein Datenübertragungssystem mit einer zentralen Konfigurationssteuereinheit, die mehreren Funktionseinheiten, die sich nur durch ihre Seriennummer unterscheiden, durch Beschreiben eines dafür eingerichteten Adressregisters geeignete Adressen zuweisen kann.

Die Patentschrift DE 197 13 240 C2 beschreibt ein Verfahren zur automatischen Adressenvergabe in einem CAN Netzwerk, bei welchem die Busteilnehmer sich nach Aufforderung durch einen Master per Zufallsgenerator eine Adresse generieren und anschließend anhand des Datenverkehrs auf dem Bus und anhand ihres eigenen Erfolges beim Buszugriff feststellen, ob diese Adresse innerhalb des Busverbundes eindeutig oder bereits vergeben ist. Eine gezielte Adressvergabe oder Beeinflussung der Adressvergabe durch den Master, beispielsweise mit dem Ziel der Festlegung einer Priorität unter den Busteilnehmern, ist hier nicht vorgesehen.

Die europäische Patentschrift EP0893767 beschreibt ein Verfahren zur Adressvergabe in einem Kommunikationsbussystem mit mindestens einem Master-Busteilnehmer und mindestens einem Slave-Busteilnehmer; der Master-Busteilnehmer die Adressvergabe durch eine für alle Busteilnehmer verabredete Abfragebotschaft initiiert, wenigstens die Slave-Busteilnehmer, denen noch keine Adresse zugewiesen wurde, vom Master nach Empfang der Seriennummer eine geeignete Adresse zugewiesen bekommen und diese für die weitere Kommunikation auf dem Bus verwenden und der Master-Busteilnehmer erkennt, wenn allen Slave-Busteilnehmern erfolgreich eine Adresse zugewiesen wurde. Die europäische Patentschrift EP 2 014 062 B1 offenbart ein Verfahren, bei welchem ein neu an einen Datenbus hinzukommender Teilnehmer aus seiner Seriennummer eine vorläufige Adresse und einen Sendezeitpunkt ableitet, sich unter Nutzung beider Werte eingenständig mit einer Antragsnachricht am Bus meldet und als Antwort auf die Antragsnachricht eine geeignete endgültige Adresse von einem koordinierenden Steuergerät zur weiteren Nutzung erhält.
Die aus dem Stand der Technik bekannten Verfahren liefern nicht in jeder Hinsicht befriedigende Ergebnisse.

### Offenbarung der Erfindung

Aufgabe der Erfindung ist es, ein Verfahren anzugeben, bei welchem gleichartige Steuergeräte, die sich beispielsweise nur in Ihrer Seriennummer unterscheiden, ohne vorab erfolgter Zuweisung unterschiedlicher Adressen an einen Kommunikations-Bus angeschlossen werden können und von einem Master-Steuergerät in der Weise Adressen zugewiesen bekommen, dass das Master-Steuergerät die Kontrolle über den Ablauf des Vergabeprozesses und die vergebenen Adressen hat.
Diese Aufgabe wird durch das Verfahren mit den Merkmalen des unabhängigen Anspruchs eins gelöst.

### Vorteile der Erfindung

Die beschriebene Aufgabe wird erfindungsgemäß dadurch gelöst, dass das Mastersteuergerät eine Vergabe der Adressen durch einen verabredeten Befehl startet und die Slave-Busteilnehmer oder Slaves abhängig davon, ob ihnen bereits eine Adresse zugewiesen wurde oder nicht, unterschiedlich antworten.
Die Slaves, denen bereits eine Adresse zugewiesen wurde, melden sich auf der ihnen zugewiesenen Adresse. Die Slaves, denen noch keine Adresse zugewiesen wurde, teilen dem Master durch ein geeignetes Kommunikationsverfahren, das vorteilhafterweise die Wahrscheinlichkeit von Botschaftskollisionen minimiert, ihre Seriennummer mit. Der Master weist darauf hin eine geeignete Adresse zu. Es kann von Vorteil sein, dass der Master die Seriennummer zusammen mit der zugewiesenen Adresse in eine Liste einträgt, die er in seinem Speicher verwaltet.

In einer bevorzugten Ausführungsform sind die teilnehmenden Steuergeräte für die Vergabe der Adressen durch eine geeignete Programmierung eingerichtet, die insbesondere die Durchführung des erfindungsgemäßen Verfahrens durch ein geeignetes Protokoll unterstützt. Dieses Protokoll kann vorteilhafterweise ein auf dem CAN Protokoll aufsetzendes Transportprotokoll sein, das für die durchzuführenden Schritte wie zum Beispiel das Beschreiben von Speicherbereichen geeignet ist. Ebenfalls eine bevorzugte Ausprägung ist es, Dienste aus einem bekannten Diagnoseprotokolle zu verwenden, wie zum Beispiel aus dem UDS (Unified Diagnostic Services) Standard.

Weiterhin ist es von Vorteil, wenn der Master durch eine geeignete Programmierung beziehungsweise Konfiguration weiss, wieviele Slaves im Normallfall am Bus angeschlossen sein sollen.

Ebenfalls von Vorteil ist, wenn der Master, nachdem er eine erfolgreiche Vergabe der Adressen an die vorhandenen Slaves erkannt hat, den normalen Busbetrieb startet.

Damit Slave Busteilnehmer, denen noch keine Adresse zugewiesen wurde, ihre Seriennummer an den Master senden können, ist es vorteilhaft, wenn sie auf einer festgelegten Adresse zu zufällig gewählten Zeitpunkten ihre Daten an den Master senden. Hierdurch werden Kollisionen zwischen dem gesendeten Daten unwahrscheinlich. Es kann sinnvoll sein, dass der Master einen Zeitbereich mit definierten Zeitfenstern zum Senden für die Slaves Vorgibt.

Sofern das erfindungsgemäßen Verfahren mehrmals durchlaufen werden muss, um die Adressenvergabe abzuschließen, ist es vorteilhaft, den genannten Zeitbereich jeweils gemäß der Anzahl von Slave Busteilnehmern, denen noch keine Adresse zugewiesen wurde, anzupassen. Dadurch kann die Gesamtzeit, die für die Vergabe der Adressen benötigt wird, reduziert werden.

Eine andere Möglichkeit ist es, dass die Slave Busteilnehmer ihre Seriennummer als Adresse für das Versenden verwenden. Hierzu ist es im Falle der Verwendung eines CAN-Busses sinnvoll, in den extended Mode des CAN Protokolls umzuschalten. Sind die in extended Mode verfügbaren Adressen noch nicht ausreichend, um alle Seriennummern abzubilden, kann zusätzlich durch eine geeignete Maskierung der Bereich der Seriennummern in Teilbereiche unterteilt werden.

Vorteilhaft ist weiterhin, wenn eine Fehlerbehandlung für den Fall eingeleitet wird, dass sich im Laufe des Vergabeverfahrens nicht die erwartete Anzahl von Slaves am Bus meldet. Fragen etwa zu viele Slaves eine Adresse an, kann durch eine geeignete Fehlermeldung eine fehlerhafte Buskonfiguration signalisiert werden. Sind zu wenige Slaves aktiv geworden, kann das Verfahren iteriert, ein Reset der Slaves initiiert, oder - insbesondere nach erfolglosem Durchlaufen einer vorgegebenen Anzahl von Iterationen - ebenfalls eine geeignete Fehlermeldung ausgelöst werden.

### Zeichnungen

Die Erfindung wird im weiteren anhand der Zeichnungen vorgestellt und näher erläutert.
Figur 1 zeigt ein erfindungsgemäßes Bussystem mit einem Master- und mindestens zwei Slave-Busteilnehmern, die zur Durchführung des erfindungsgemäßen Verfahrens eingerichtet sind.
Figur 2 zeigt ein Flussdiagramm für ein Ausführungsbeispiel des erfindungsgemäßen Verfahrens.
Figur 3 zeigt beispielhaft ein Zeitschema für die erfindungsgemäße Kollisionsminimierung durch zufällig gewählte Sendezeitpunkte.
Figur 4 zeigt ein Beispiel für die erfindungsgemäße Zuordnungstabelle des Master-Busteilnehmers.

### Beschreibung der Ausführungsbeispiele

Im Weiteren werden Ausführungsbeispiele für das erfindungsgemäßes Verfahren und die Vorrichtung beschrieben. Diese konkreten Beispiele werden zur Erläuterung der Ausführung eingesetzt, beschränken aber nicht den Umfang des Erfindungsgedankens. Insbesondere wird in den Ausführungsbeispielen von der Verwendugn eines CAN-Busses ausgegangen. Das Verfahren ist aber auf andere Bussysteme mit ereignisgesteuertem, adressenbasiertem Zugriff auf den Bus durch die Busteilnehmer übertragbar.

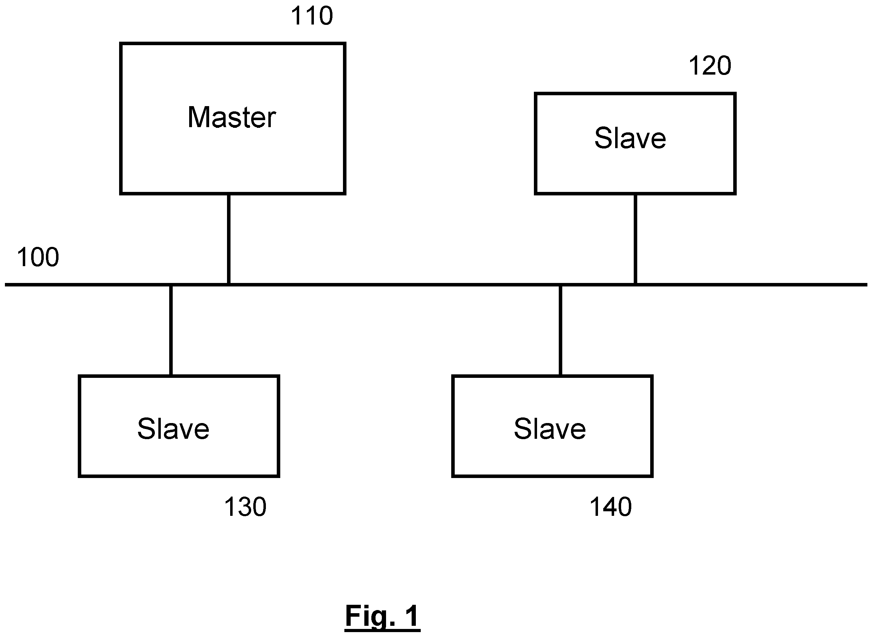

Wir betrachten einen CAN-Bus 100 mit mehreren Teilnehmern 110, 120, 130, 140, wie in Figur 1 dargestellt. 110 ist ein Master-Busteilnehmer. 120, 130 und 140 sind Slave-Busteilnehmer. Darüber hinaus können weitere Teilnehmer am Bus vorhanden sein, die gültige Adressen besitzen und nicht an dem erfindungsgemäßen Vergabeverfahren teilnehmen. Sind solche Teilnehmer vorhanden, muss sichergestellt sein, dass diese Teilnehmer das erfindungsgemäße Verfahren nicht stören. Gleichzeitig muss sichergestellt sein, dass das erfindungsgemäße Verfahren in diesen Teilnehmern keine Fehlerzustände oder Fehlerspeichereinträge hervorruft. Abgesehen von diesen Punkten spielen diese Teilnehmer für das Verfahren keine weitere Rolle und werden hier nicht weiter erwähnt.

Wir betrachten als erstes Ausführungsbeispiel den Fall, dass zu Beginn des Verfahrens alle Slaves sich lediglich durch ihre Seriennummer unterscheiden. Die an dem Verfahren teilnehmenden Steuergeräte 110, 120, 130, 140 in Figur 1 sind für das Adressen-Vergabeverfahren durch eine geeignete Programmierung eingerichtet, die einzelne Dienste aus dem Diagnoseprotokoll UDS (Unified Diagnostic Services) in angepasster Form nutzt.

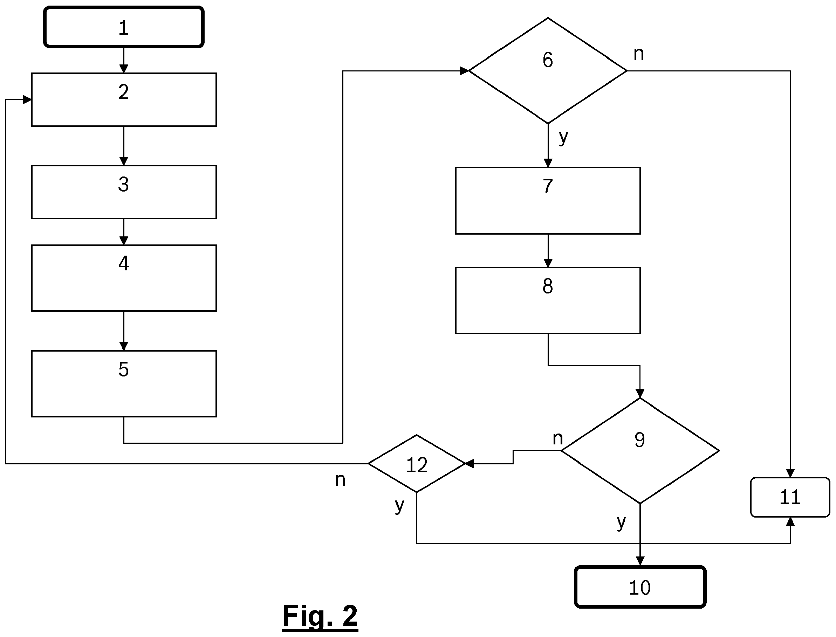

Das erfindungsgemäße Verfahrens wird anhand des in Figur 2 als Flussdiagramm dargestellen Ablaufs erläutert.

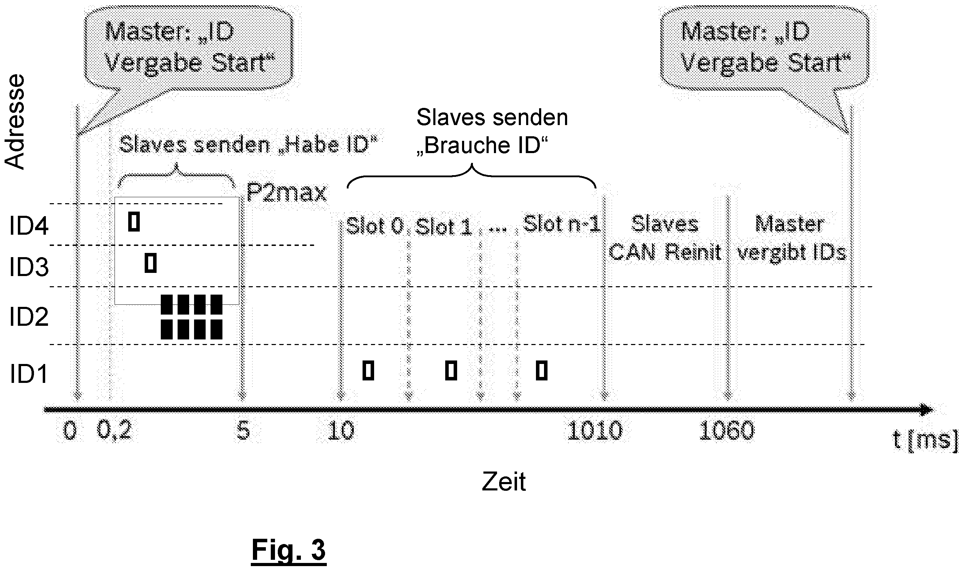

Der Master Busteilnehmer 110 kennt durch eine geeignete Programmierung oder Konfigurierung die Anzahl der Slaves, die an der Kommunikation teilnehmen sollen. Darüberhinaus führt er eine Liste von Seriennummern und Adressen, in welche er einträgt, welche Adressen er den verschiedenen Slaves zugewiesen hat.
In Schritt 2 von Figur 2 fordert der Master Busteilnehmer alle Slave Busteilnehmer auf, sich mit der ihnen zugewiesenen Adresse auf dem Bus zu melden. Gäbe es bereits Busteilnehmer mit zugewiesenen Adressen, würden sich diese im darauffolgenden Schritt 3 melden. Da jedoch noch keinem Busteilnehmer eine Adresse zugewiesen wurde, meldet sich keiner der Slave Busteilnehmer. In Schritt 3 findet daher in diesem Beispiel keine Kommunikation zwischen den beteiligten Steuergeräten statt. Er wird im zweiten Ausführungsbeispiel von Interesse sein.
In Schritt 4 von Figur 2 treffen die Busteilnehmer vorbereitende Maßnahmen, um in der anschließenden Buskommunikation Kollisionen zu vermeiden. Hier gibt es verschiedene Möglichkeiten. Beispielsweise kann der Master durch einen geeigneten Befehl einen Zeitbereich mit Zeitfenstern vorgeben, in welchem die Slaves bei ihm die Vergabe einer Adresse beantragen können. Dies können beispielsweise 1000 Zeitfenster sein, von denen jedes einen Millisekunde dauert. Die Anzahl und Länge der Zeitfenster ist abhängig von der Anzahl der erwarteten Busteilnehmer und/oder den für die Vergabe verfügbaren Adressen, anders gewählt werden.
Die Slaves reagieren in Schritt 5 von Figur 2, indem sie zufällig eines der gegebenen Zeitfenster auswählen und in diesem auf einer festgelegten Adresse ihre Seriennummer an den Master übertragen. In Figur 3 ist dieser Fall schematisch dargestellt. Zwischen dem mit "Slot 0" und dem mit "Slot n-1" bezeichneten Zeitpunkt, beziehungsweise in einem Zeitbereich zwischen 10 und 1010 Millisekunden nach Beginn der Vergabeprozedur, beantragen die Slaves zu einem zufällig von Ihnen ausgewählten Zeitpunkt eine Adressvergabe. Im dargestellten Beispiel senden die Slaves die Antragsbotschaft mit ihrer Seriennummer auf der Adresse ID1.

In Schritt 6 von Figur 2 erfolgt eine Prüfung, ob sich die erwartete Anzahl von Slaves gemeldet hat. Ist dies nicht der Fall, d.h. haben sich zu wenige oder zu viele Slaves gemeldet, geht der Master in einen Fehlerzustand 11 und startet eine Fehlerbehandlung.

Hat sich die erwartete Anzahl von Slaves gemeldet und die jeweilige Seriennummer an den Master übertragen, so teilt der Master im nächsten Schritt 7 von Figur 2 jedem der anfragenden Slaves eine Adresse zu. Die Zuteilung der Adresse an den Slave erfolgt in einer Botschaft mit einer festgelegten Adresse. Die Botschaft beinhaltet sowohl die Seriennummer, als auch die zugewiesene Adresse, so dass jeder Slave anhand der Seriennummer die für ihn bestimmte Adresse auswählen kann.
Des weiteren trägt der Slave die vergebene Adresse zusammen mit einer zugehörigen Kennung, beispielsweise der Seriennummer, in eine Liste ein. Es können auch weitere Informationen in der Liste eingetragen werden.

Im nächsten Schritt 8 von Figur 2 konfigurieren sich die Slaves so um, dass sie im folgenden für die Kommunikation auf dem Bus ihre zugewiesene Adressen verwenden. Anschließend senden die Slaves mindestens eine Bestätigungsbotschaft auf ihrer neuen Adresse, um zu signalisieren, dass sie die Vorbereitungen zur Buskommunikation abgeschlossen haben.

In Schritt 9 von Figur 2 prüft der Master, ob die erwartete Anzahl von Slaves eine Bestätigung gesendet hat. Optional überprüft der Master zusätzlich, ob jeder Slave auf der korrekten Adresse gesendet hat. Hierzu nutzt der Master die von ihm geführte Zuordnungsliste. Entspricht das Ergebnis der Prüfung der Erwartung, versendet der Master in Schritt 10 einen Startbefehl für normalen Busbetrieb und das Busnetzwerk geht in den normalen Busbetrieb über. Fehlen noch Slaves, so beginnt das Verfahren erneut bei Schritt 2. Haben sich zu viele Slaves gemeldet, so geht das System in einen Fehlerzustand, der in der Figur mit 11 bezeichnet ist.

Wir betrachten als zweites Ausführungsbeispiel den Fall, dass zu Beginn bereits ein oder mehrere Slaves eine Adresse besitzen, die ihnen vom Master zugewiesen wurde. Die an dem Verfahren teilnehmenden Steuergeräte 110, 120, 130, 140 in Figur 1 kommunizieren im Normalbetrieb über Standard-CAN mit 11-bit-Adressierung und sind für das Adressen-Vergabeverfahren durch eine geeignete Programmierung eingerichtet, die eigens für das Verfahren entwickelt wurde. Der Ablauf des erfindungsgemäßen Verfahrens kann auch für dieses Beispiel anhand Figur 2 erläutert werden.

Der Master Busteilnehmer 110 kennt durch eine geeignete Programmierung oder Konfigurierung die Anzahl der Slaves, die an der Kommunikation teilnehmen sollen. Darüberhinaus führt er eine Liste von Seriennummern und Adressen, in welche er zumindest einträgt, welche Adressen er den verschiedenen Slaves zugewiesen hat.

In Schritt 2 von Figur 2 fordert der Master Busteilnehmer alle Slave Busteilnehmer auf, sich mit der ihnen zugewiesenen Adresse auf dem Bus zu melden. Diejenigen Slaves am Bus, denen bereits eine Adresse zugewiesen wurde, beispielsweise in einem vorangegangenen Durchlauf des Verfahrens in demselben oder einem anderen vergleichbaren Bussystem, übertragen im Schritt 3 eine Botschaft auf der ihnen zugewiesenen Adresse an den Master, die als Inhalt die jeweilige Seriennummer enthält.

In Schritt 4 von Figur 2 treffen die Busteilnehmer vorbereitende Maßnahmen, um in der anschließenden Buskommunikation Kollisionen zu vermeiden. Der Master schaltet durch einen geeigneten Befehl die Busteilnehmer in den extended Mode des CAN-Protokolls mit 29-bit-Adressierung um. Die Slaves reagieren in Schritt 5, indem sie ihre Seriennummer als Adresse für die nun folgende Übertragung ihre Seriennummer an den Master verwenden. Für den Fall, dass die 29 Bit des extended Mode des CAN zur Abbildung der Seriennummer nicht ausreichen, kann der Master den Bereich der möglichen Seriennummern in mehrere Bereiche zerlegen. Beispielsweise kann er zunächst alles Slaves mit gerade Seriennummer zum Senden auffordern, und anschließend alles Slaves mit ungerader Seriennummer. Bei der Bildung der Adresse lassen die Slaves dann das letzte Bit der Seriennummer weg. Auf diese Weise könnte ein Bereich von Seriennummern, der 30 Bit umfasst, abgedeckt werden. Auf analoge Weise lassen sich auch noch größere Bereiche von Seriennummern durch eine entsprechende Maskierung sukzessiv abdecken.

In Schritt 6 von Figur 2 erfolgt eine Prüfung, ob sich die erwartete Anzahl von Slaves gemeldet hat. Ist dies nicht der Fall, d.h. haben sich zu wenige oder zu viele Slaves gemeldet, geht der Master in einen Fehlerzustand 11 und startet eine Fehlerbehandlung. Zusätzlich wird geprüft, ob sich jeder Slave mit der richtigen Adresse gemeldet hat, d.h. diejenigen mit bereits zugewiesener Adresse auf der zugewiesenen, die anderen auf der dem im gewählten Vergabeverfahren vorgesehenen. Ist dies nicht der Fall, wird ebenfalls eine Fehlerbehandlung im Fehlerzustand 11 gestartet.

Hat sich die erwartete Anzahl von Slaves gemeldet und die jeweilige Seriennummer an den Master übertragen, so teilt der Master im nächsten Schritt 7 von Figur 2 jedem der anfragenden Slaves eine Adresse zu. Hierbei kann das Verfahren so gestaltet werden, dass nur diejenigen Slaves eine Adresse erhalten, denen noch keine Adresse zuvor zugewiesen wurde. Es kann aber auch eine vollständige Neuverteilung der Adressen erfolgen, bei der auch die Slaves, die sich in Schritt 2 mit einer zugewiesenen Adresse gemeldet hatten, erneut eine Adresse erhalten. Die Zuteilung der Adresse an den Slave erfolgt in einer Botschaft mit einer festgelegten Adresse. Die Botschaft beinhaltet sowohl die Seriennummer, als auch die zugewiesene Adresse, so dass jeder Slave anhand der Seriennummer die für ihn bestimmte Adresse auswählen kann.
Des weiteren trägt der Slave die vergebene Adresse zusammen mit einer zugehörigen Kennung, beispielsweise der Seriennummer, in eine Liste ein.

Im nächsten Schritt 8 von Figur 2 konfigurieren sich die Slaves so um, dass sie im folgenden für die Kommunikation auf dem Bus ihre zugewiesene Adressen verwenden. Außerdem wird wieder auf Standard-CAN-Kommunikation mit 11-Bit-Adressierung zurückgeschaltet. Anschließend senden die Slaves eine Bestätigungsbotschaft auf ihrer neuen Adresse.

In Schritt 9 von Figur 2 prüft der Master, ob die erwartete Anzahl von Slaves eine Bestätigung gesendet hat. Optional überprüft der Master zusätzlich, ob jeder Slave auf der korrekten Adresse gesendet hat. Hierzu nutzt der Master die von ihm geführte Zuordnungsliste. Entspricht das Ergebnis der Prüfung der Erwartung, versendet der Master in Schritt 10 einen Startbefehl für normalen Busbetrieb und das Busnetzwerk geht in den normalen Busbetrieb über. Fehlen noch Slaves, so beginnt das Verfahren erneut bei Schritt 2. Haben sich zu viele Slaves gemeldet, so geht das System in einen Fehlerzustand, der in der Figur mit 11 bezeichnet ist.

Ein Beispiel ist, dass lediglich ein neuer Slave, beispielsweise ein Ersatzteil aufgrund eines Ausfalls, neu an dem Bus angeschlossen wurde. In diesem Falle beantworten die Slaves die Abfrage des Masters in Schritt 2, indem sie in Schritt 3 auf ihrer zugewiesenen Adresse eine Botschaft mit ihrer Seriennummer an den Master versenden. Der Master zählt die Anzahl Rückmeldungen, vergleicht optional die empfangenen Botschaften mit seiner Liste und verfährt ansonsten wie weiter oben beschrieben. Diese Prüfung kann direkt nach Schritt 3 stattfinden oder auch erst nach erfolgter Rückmeldung des neuen Slaves ohne zugewiesene Adresse in Schritt 6, wie in Figur 2 dargestellt.
In Figur 3 ist der zeitliche Ablauf des Vergabeverfahrens mit bereitgestellten Zeitslots dargestellt, das weiter oben in Zusammenhang mit Schritt 4 von Figur 2 schon erläutert wurde. Nach oben sind unterschiedliche Adressen aufgetragen, die Zeitachse verläuft nach rechts. Es ist zur näheren Erläuterung der Fall dargestellt, dass während des Verfahrens ein Slave eine Adresse besitzt, die ihm nicht vom Master zugewiesen wurde, im dargestellten Fall die Adresse ID2. Dieser Fall kann beispielsweise dann auftreten, wenn der Slave zuvor in einem anderen Bus zum Einsatz kam. Es ist dann möglich, dass die Adresse des betreffenden Slaves bereits durch den Master an einen anderen Busteilnehmer vergeben ist und es daher beim Versenden der Seriennummern in Schritt 3 von Figur 2 zu Kollisionen kommt. Dies ist im dargestellten Beispiel im Zeitbereich zwischen 0,2 und 5 Millisekunden der Fall. Die kollidierenden Nachrichten sind dadurch erkennbar, dass sie ausgefüllt dargestellt sind.
Alternativ ist es auch möglich, dass es in Schritt 5 wegen zufällig gleicher Sendezeitpunkte oder zufällig gleicher, aus der Seriennummer abgeleiteter Sendeadresse zu Kollisionen kommt.
Im dargestellten Fall gibt es für Schritt 3 ein Abbruchkriterium, das bewirkt, dass nach vier Sendeversuchen abgebrochen wird. Es muss eine geeignete Fehlerbehandlung eingeleitet werden, die zu einer Neuvergabe von Adressen mindestens an die Steuergeräte mit kollidierenden Adressen führt.

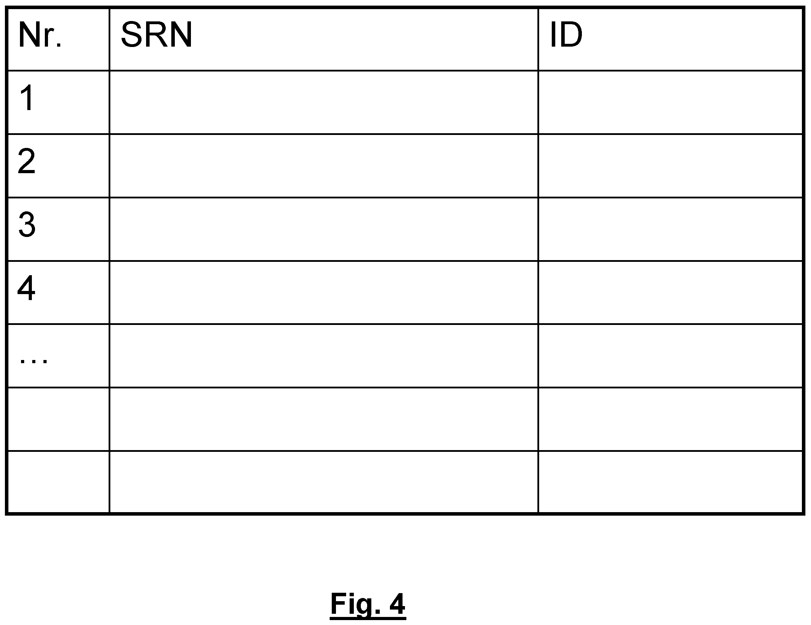

In Figur 4 ist die bereits mehrfach angesprochene Zuordnungstabelle des Masters dargestellt. Auch wenn es nicht zu Kollisionen kommt, aber ein Slave eine Adresse besitzt, die ihm nicht vom Master zugewiesen wurde, kann der Master dies bei dem Vergleich in Schritt 6 unter Nutzung der Tabelle feststellen und eine geeignete Fehlerbehandlung einleiten.

Des weiteren wird eine Fehlerbehandlung eingeleitet, wenn das Verfahren nach einer vorgegebenen Anzahl von Iterationen nicht zum Erfolg führt, beispielsweise weil ein Slave dauerhaft ohne Funktion ist, sich zu viele Slaves am Bus befinden, oder die Botschaft des Masters nicht von allen Slaves empfangen wird. Hier kann ein Zurücksetzen einiger oder aller beteiligten Steuergeräte als Fehlerbehandlung durchgeführt werden, es kann aber auch eine Abschaltung mit entsprechendem Fehlerspeichereintrag sinnvoll sein.

## Patentansprüche

1. Verfahren zur Adressvergabe in einem Kommunikationsbussystem (100) mit mindestens einem Master-Busteilnehmer (110) und mindestens einem Slave-Busteilnehmer (120, 130, 140), **dadurch gekennzeichnet, dass**:
- der Master-Busteilnehmer die Adressvergabe durch eine für alle Busteilnehmer verabredete Abfragebotschaft initiiert,
- Slave-Busteilnehmer, denen bereits eine Adresse zugewiesen wurde, diese Abfragebotschaft durch Übermittlung einer Botschaft auf ihrer zugewiesenen Adresse beantworten,
- Slave-Busteilnehmer, denen noch keine Adresse zugewiesen wurde, auf diese Abfragebotschaft hin Maßnahmen ergreifen, um kollisionsvermeidend auf dem Bus senden zu können und unter Nutzung dieser Maßnahmen an den Master-Busteilnehmer ihre Seriennummer übermitteln,
- wenigstens die Slave-Busteilnehmer, denen noch keine Adresse zugewiesen wurde, vom Master nach Empfang der Seriennummer eine geeignete Adresse zugewiesen bekommen und diese für die weitere Kommunikation auf dem Bus verwenden und
- der Master-Busteilnehmer erkennt, wenn allen Slave-Busteilnehmern erfolgreich eine Adresse zugewiesen wurde,
**dadurch gekennzeichnet, dass** die Maßnahmen zur Kollisionsvermeidung die auf mindestens einer zumindest näherungsweise zufällig ausgewählten Zahl basierende Ermittlung eines individuellen Sendezeitpunktes innerhalb eines vorgebbaren oder vorgegebenen Zeitbereiches durch mindestens einen Slave-Busteilnehmer beinhalten,
wobei der vorgebbare oder vorgegebene Bereich möglicher individueller Sendezeitpunkte vom Master-Busteilnehmer vorgegeben wird,
wobei der vorgebbare oder vorgegebene Bereich möglicher individueller Sendezeitpunkte in Abhängigkeit von der Anzahl der Slave-Busteilnehmer, denen noch keine Adresse zugewiesen wurde, oder von der Anzahl der erwarteten Busteilnehmer und/oder den für die Vergabe verfügbaren Adressen angepasst wird.

2. Verfahren gemäß einem der vorangegangenen Ansprüche, **dadurch gekennzeichnet, dass** für die Steuerung des Adressvergabeprozesses auf dem Bus zumindest teilweise ein Transportprotokoll oder Diagnoseprotokoll verwendet wird.

3. Verfahren gemäß einem der vorangegangenen Ansprüche, **dadurch gekennzeichnet, dass** für die Steuerung des Adressvergabeprozesses zumindest teilweise Mechanismen und/oder Services aus dem UDS-Standard verwendet werden.

4. Verfahren gemäß einem der vorangegangenen Ansprüche, **dadurch gekennzeichnet, dass** im Master-Busteilnehmer für die Erkennung der erfolgreichen Adressvergabe an alle Slave-Busteilnehmer eine Information über die Anzahl der vorhandenen Slave-Busteilnehmer vorliegt.

5. Verfahren gemäß einem der vorangegangenen Ansprüche, **dadurch gekennzeichnet, dass** im Master-Busteilnehmer für die Erkennung der erfolgreichen Adressvergabe an alle Slave-Busteilnehmer eine Liste von Seriennummern und zugehörigen vergebenen Adressen vorliegt und aktualisiert wird.

6. Verfahren gemäß einem der vorangegangenen Ansprüche, **dadurch gekennzeichnet, dass** der Master-Busteilnehmer, nachdem er einen erfolgreichen Abschluss der Adressenvergabe an die Busteilnehmer erkannt hat, durch eine verabredete Botschaft die Buskommunikation nach CAN-Standard startet.

7. Verfahren gemäß einem der vorangegangenen Ansprüche, **dadurch gekennzeichnet, dass** der Master-Busteilnehmer, sofern er keinen erfolgreichen Abschluss der Adressenvergabe an die Busteilnehmer erkannt hat, das Verfahren wiederholen kann, und dass nach Durchführung einer vorgegebenen Anzahl von Wiederholungen, die größer oder gleich Null ist, das Verfahren abgebrochen und ein Fehler signalisiert wird.

8. Steuergerät für den Einsatz in einem CAN-Netzwerk mit mindestens einem Master- und mindestens einem Slave-Busteilnehmer, **dadurch gekennzeichnet, dass** das Steuergerät durch geeignete Programmierung für die Ausführung der Master-Aufgaben gemäß einem der vorangegangenen Verfahrensansprüche zur Adressvergabe eingerichtet ist.

9. Steuergerät für den Einsatz in einem CAN-Netzwerk mit mindestens einem Master- und mindestens einem Slave-Busteilnehmer, **dadurch gekennzeichnet, dass** das Steuergerät durch geeignete Programmierung für die Ausführung der Slave-Aufgaben gemäß einem der vorangegangenen Verfahrensansprüche zur Adressvergabe eingerichtet ist.

## Claims

1. Method for address allocation in a communication bus system (100) having at least one master bus subscriber (110) and at least one slave bus subscriber (120, 130, 140), **characterized in that**:
- the master bus subscriber initiates the address allocation by means of a query message arranged for all bus subscribers,
- slave bus subscribers to which an address has already been assigned respond to this query message by transmitting a message on their assigned address,
- slave bus subscribers to which an address has not yet been assigned take measures in response to this query message in order to be able to send on the bus while avoiding collisions and use these measures to transmit their serial number to the master bus subscriber,
- at least the slave bus subscribers to which an address has not yet been assigned are assigned a suitable address by the master following reception of the serial number and use this address for the further communication on the bus, and
- the master bus subscriber detects when all slave bus subscribers have successfully been assigned an address, **characterized in that** the measures to avoid collisions include the ascertainment, based on at least one at least approximately randomly selected number, of an individual transmission time within a prescribable or prescribed time range by at least one slave bus subscriber, the prescribable or prescribed range of possible individual transmission times being prescribed by the master bus subscriber,
wherein the prescribable or prescribed range of possible individual transmission times is adapted on the basis of the number of slave bus subscribers to which an address has not yet been assigned or on the basis of the number of expected bus subscribers and/or the addresses available for allocation.

2. Method according to one of the preceding claims, **characterized in that** a transport protocol or diagnosis protocol is used at least in part for controlling the address allocation process on the bus.

3. Method according to either of the preceding claims, **characterized in that** mechanisms and/or services from the UDS standard are used at least in part for controlling the address allocation process.

4. Method according to one of the preceding claims, **characterized in that** a piece of information about the number of available slave bus subscribers is present in the master bus subscriber for detecting the successful address allocation to all slave bus subscribers.

5. Method according to one of the preceding claims, **characterized in that** a list of serial numbers and associated allocated addresses is present and updated in the master bus subscriber for detecting the successful address allocation to all slave bus subscribers.

6. Method according to one of the preceding claims, **characterized in that** the master bus subscriber, after having detected successful conclusion of the address allocation to the bus subscribers, starts bus communication based on the CAN standard by means of an arranged message.

7. Method according to one of the preceding claims, **characterized in that** the master bus subscriber, if it has not detected successful conclusion of the address allocation to the bus subscribers, can repeat the method and that after performance of a prescribed number of repetitions that is greater than or equal to zero, the method is terminated and an error is signalled.

8. Controller for use in a CAN network having at least one master bus subscriber and at least one slave bus subscriber, **characterized in that** the controller is set up by means of suitable programming to perform the master tasks according to one of the preceding method claims for address allocation.

9. Controller for use in a CAN network having at least one master bus subscriber and at least one slave bus subscriber, **characterized in that** the controller is set up by means of suitable programming to perform the slave tasks according to one of the preceding method claims for address allocation.

## Revendications

1. Procédé d'attribution d'adresse dans un système de bus de communication (100) comprenant au moins un périphérique maître de bus (110) et au moins un périphérique esclave de bus (120, 130, 140), **caractérisé en ce que** :
- le périphérique maître de bus initie l'attribution d'adresse par un message d'interrogation convenu pour tous les périphériques de bus,
- les périphériques esclaves de bus auxquels cette adresse a déjà été attribuée répondent à ce message d'interrogation en communiquant un message sur leur adresse attribuée,
- les périphériques esclaves de bus auxquels aucune adresse n'a encore été attribuée, sur réception de ce message d'interrogation, prennent des mesures pour pouvoir émettre sur le bus en évitant les collisions et communiquent leur numéro de série au périphérique maître de bus en utilisant ces mesures,
- au moins les périphériques esclaves de bus auxquels aucune adresse n'a encore été attribuée, se voient attribuer une adresse appropriée par le maître après la réception du numéro de série et utilisent celle-ci pour la suite de la communication sur le bus et
- le périphérique maître de bus reconnaît quand une adresse a bien été attribuée à tous les périphériques esclaves de bus,
**caractérisé en ce que** les mesures visant à éviter les collisions comprennent la détermination, par au moins un périphérique esclave de bus, d'un instant d'émission individuel, à l'intérieur d'une plage de temps pouvant être ou étant prédéfinie, sur la base d'au moins un nombre sélectionné de manière au moins partiellement aléatoire,
la plage pouvant être ou étant prédéfinie d'instants d'émission individuels possibles étant prédéfinie par le périphérique maître de bus,
la plage pouvant être ou étant prédéfinie d'instants d'émission individuels possibles étant adaptée en fonction du nombre de périphériques esclaves de bus auxquels aucune adresse n'a encore été attribuée, ou du nombre de périphériques de bus attendus et/ou des adresses disponibles pour l'attribution.

2. Procédé selon l'une des revendications précédentes, **caractérisé en ce qu'**un protocole de transport ou un protocole de diagnostic est utilisé au moins partiellement pour la commande du processus d'attribution d'adresse sur le bus.

3. Procédé selon l'une des revendications précédentes, **caractérisé en ce que** des mécanismes et/ou des services issus de la norme UDS sont utilisés au moins partiellement pour la commande du processus d'attribution d'adresse.

4. Procédé selon l'une des revendications précédentes, **caractérisé en ce qu'**une information à propos du nombre de périphériques esclaves de bus présents se trouve dans le périphérique maître de bus pour la reconnaissance de l'attribution d'adresse réussie à tous les périphériques esclaves de bus.

5. Procédé selon l'une des revendications précédentes, **caractérisé en ce qu'**une liste de numéros de série et des adresses attribuées associées est présente dans le périphérique maître de bus et actualisée pour la reconnaissance de l'attribution d'adresse réussie à tous les périphériques esclaves de bus.

6. Procédé selon l'une des revendications précédentes, **caractérisé en ce que** le périphérique maître de bus, après qu'il ait reconnu un aboutissement réussi de l'attribution d'adresse aux périphériques de bus, démarre la communication de bus selon la norme CAN par un message convenu.

7. Procédé selon l'une des revendications précédentes, **caractérisé en ce que** le périphérique maître de bus, dans la mesure où il n'a pas reconnu un aboutissement réussi de l'attribution d'adresse aux périphériques de bus, peut répéter le procédé, et **en ce qu'**après avoir effectué un nombre prédéfini de répétitions, qui est supérieur ou égal à zéro, le procédé est interrompu et une erreur est signalée.

8. Contrôleur destiné à être utilisé dans un réseau CAN comprenant au moins un périphérique de bus maître et au moins un périphérique de bus esclave, **caractérisé en ce que** le contrôleur, par une programmation appropriée, est conçu pour l'exécution des tâches de maître selon l'une des revendications précédentes en vue de l'attribution d'adresse.

9. Contrôleur destiné à être utilisé dans un réseau CAN comprenant au moins un périphérique de bus maître et au moins un périphérique de bus esclave, **caractérisé en ce que** le contrôleur, par une programmation appropriée, est conçu pour l'exécution des tâches d'esclave selon l'une des revendications de procédé précédentes en vue de l'attribution d'adresse.
